(19) **Europäisches Patentamt**
**European Patent Office**
**Office européen des brevets**

(11) **EP 4 383 199 A1**

(12) **EUROPEAN PATENT APPLICATION**
published in accordance with Art. 153(4) EPC

(43) Date of publication:
**12.06.2024 Bulletin 2024/24**

(21) Application number: **22853597.7**

(22) Date of filing: **26.06.2022**

(51) International Patent Classification (IPC):
**G06T 7/80** (2017.01)    **G06V 20/58** (2022.01)
**G06T 7/536** (2017.01)

(52) Cooperative Patent Classification (CPC):
**G06T 7/536; G06T 7/80; G06V 20/58**

(86) International application number:
**PCT/RU2022/050200**

(87) International publication number:
**WO 2023/014246 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.08.2021 RU 2021123500**

(71) Applicant: **Obshchestvo s Ogranichennoi
Otvetstvennostiu
"Evokargo"
Moscow, 129085 (RU)**

(72) Inventors:
• **ABRAMOV, Maksim Petrovich
Domodedovo, 142000 (RU)**
• **SHIPITKO, Oleg Sergeevich
Moskovskiy, 108811 (RU)**
• **GRIGOREV, Anton Sergeevich
Dmitrov, 141801 (RU)**

(74) Representative: **Osmans, Voldemars et al
Agency Tria Robit
P.O. Box 22
LV-1010 Riga (LV)**

(54) **METHOD OF CALIBRATING EXTRINSIC VIDEO CAMERA PARAMETERS**

(57)    The invention relates to the field of technical vision, namely, to methods for calibrating the external parameters of video cameras.

A method for calibrating the external parameters of video cameras is proposed, wherein during the movement of a vehicle, images of the environment are obtained from video cameras, linear features of the environment are highlighted in the image, an image with linear features is formed and rectilinear segments are isolated, the position of the vanishing point for the selected rectilinear segments is determined as the intersection point of the formed rectilinear segments by determining the parameters of a function describing a straight line formed from a set of points characterizing the totality of these rectilinear segments; then the position of the vanishing point is compared with the position of the principal point, and based on the obtained deviation, the values of the camera rotation angles are determined taking into account the focal lengths known from the internal calibration of the camera, and finally an adjusted image is formed taking into account determined camera rotation angles.

In the preferred embodiment of the method for calibrating the external parameters of video cameras, rectilinear segments in the image are formed by using a fast Hough transform.

The technical result of the claimed invention implies increasing the accuracy of calibration of video cameras external parameters.

EP 4 383 199 A1

**Description**

**FIELD OF THE INVENTION**

The invention relates to the field of technical vision, in particular to methods for calibrating the external parameters of video cameras.

**BACKGROUND**

Operation of video cameras while as part of land vehicles (LV), including autonomous ones, implies special operating conditions. Vibration and mechanical stress during the vehicle movement lead to changes in the external parameters of the video camera, such as rotation angle (pitch, roll and yaw), which negatively affects the parameters of the rotation matrix that converts the coordinates of the observed object from the video camera coordinate system into the LV coordinate system.

Thus, the uncorrected change of camera rotation angles during movement leads to the accumulation of errors in localization of the observed object or autonomous LV and decreases the accuracy of localization of these objects.

The following methods of calibrating the external parameters of video cameras are known in the pertinent art.

A method is known for automatic calibration of a video camera based on a mobile platform (KR20150096128), which includes the following steps: obtaining four or more images of the target object in different directions from a video camera located on a mobile platform, a preprocessing stage, selecting several straight lines from each input image, obtaining the midline by classifying the types of detected straight lines, determining the coordinates of the vanishing point based on the specified midline, and the stage of obtaining the parameter value of applying the coordinates of the detected vanishing point to the calibration formula to calculate the values of internal parameters.

A method is known for online calibration of a video system (US2011115912) using vanishing points estimated from frames of images from a video camera containing identified markings or road edges. Vanishing points are determined by finding or extrapolating at least one left and/or right side of the road markings or edges to the intersection point, whereby the long-term average location of the vanishing point is calculated using temporal filtering methods from a sequence of images, even when only one side of the road, lane marking or edge is visible in any given frame at a given time, and the yaw and pitch angles of the video camera are derived from the time-averaged coordinates of the vanishing point location.

A common disadvantage for the presented technical solutions is the use of multiple images obtained from video cameras to determine the vanishing point, which reduces the speed of image processing and increases the required computing power.

A method is known for determining the roll angle of a video camera mounted on a vehicle (CN112017249), which includes the following steps: obtaining images from a vehicle-mounted video camera, extracting all straight lines in the horizontal direction of the area of the vehicle body in the image, determining all slopes of straight lines in the horizontal direction and identifying among them the average value of the slope, calculating the video camera roll angle in accordance with the identified average value of the slope. The azimuth and pitch angle are obtained from the position of the vanishing point, determined by the road lane lines in the image.

In this method the vanishing point position is preferably determined using two selected straight lines in the image, which leads to decreased accuracy of determining vanishing point coordinates and, as a result, to lower accuracy of calibration of video cameras external parameters.

A method is known for automatic calibration of video cameras (US2018324415), according to which, during the movement of a vehicle, images of environment are received from video cameras, key image points are selected in the area limited by the location of the road, while key points are tracked using the optical flow method, filtration procedures are applied to key points, at least two straight lines are determined that correspond to opposite sides of the road, then the vanishing point is determined for the selected lines, the position of the obtained vanishing point is compared with the position of the principal point; based on the deviation obtained, the values of the pitch and yaw angles of the video camera are determined using the following formulas:

$$\text{pitch} = \text{arctg}(-V_p + c_y/f_y)$$

$$\text{yaw} = \text{arctg}((U_p - c_x)*\cos(\text{pitch})/f_x,$$

where *pitch, yaw* are the angles of pitch and yaw of the video camera;
$V_p$, $U_p$ are the coordinates of the image vanishing point;

$C_x$, $C_y$ are the coordinates of the principal point of the video camera;

$f_x$, $f_y$ are the focal lengths.

The presented method is characterized by the fact that straight lines are determined in several images by constructing a straight line (trajectory) of movement of the selected point from one image to another, which reduces the speed of image processing and increases the required computing power of the on-board computer.

The described technical solution is closest in technical essence to the claimed invention and can act as a prototype.

## SUMMARY

The claimed invention is designed to create a method for calibrating the external parameters of video cameras used in land vehicles by determining the vanishing point position using selected rectilinear segments in a single image, obtained from a video camera, which allows for a high accuracy assessment of changes in the video cameras rotation angles (pitch and yaw) during the land vehicle movement and performing a virtual rotation of the video camera, while the method has the advantage of reducing the required computing power during image processing.

In the claimed method, virtual rotation of the video camera is understood as such a transformation of an image to a new image, which could be obtained from a video camera rotated at a given angle.

The technical result of the claimed invention consists in improving the accuracy of calibration of external parameters of video cameras.

The technical result is achieved by implementing a method for calibrating the external parameters of video cameras, characterized by the fact that during the movement of a vehicle, images of the environment are obtained from video cameras, linear features of the environment are identified in the image, an image with linear features and rectilinear segments is formed, the position of the vanishing point for the determined rectilinear segments is identified as the position of the intersection point of the formed rectilinear segments by determining the parameters of the function describing the straight line formed from sets of points characterizing the totality of these rectilinear segments, the vanishing point position is compared with the principal point position; based on the deviation obtained, the values of the camera's rotation angles are determined, taking into account the focal lengths known from the internal calibration of the camera, and an adjusted image is formed, taking into determined camera rotation angles.

In the preferred embodiment of the method for calibrating the external parameters of video cameras, rectilinear segments in the image are formed by using a fast Hough transform.

As part of the presentation of the proposed method, the following explanations, clarifying the meaning of the terms used, are introduced.

Thus, the vanishing point is understood as the point of intersection of straight lines parallel in the real world.

The principal point is the point of intersection of the image plane with 10the optical axis of a video camera.

## BRIEF DESCRIPTION OF THE DRAWINGS

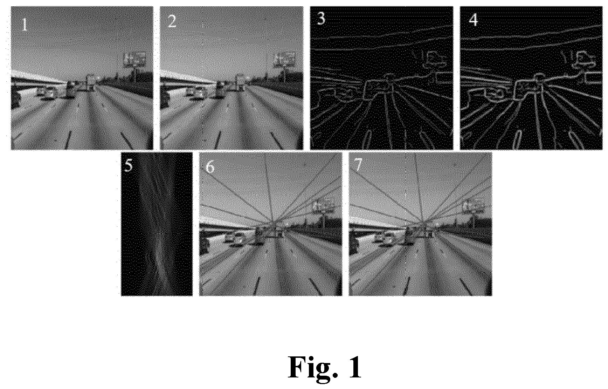

Figure 1 shows the steps in the sequence of actions characterizing the proposed method for calibrating the external parameters of video cameras, where 1 is obtaining the original image from the LV video cameras, 2 is converting the original image to grayscale, 3 is identification of linear features of the environment, 4 - image filtering, 5 - formation of a Hough image, 6 - selection of rectilinear segments at the initial position, 7 - determination of the vanishing point in the original image.

## DETAILED DESCRIPTION OF THE INVENTION

The method for calibrating of video cameras is preferably implemented as follows (Fig. 1).

During the LV movement, the front video cameras register images of linear environmental features of the carriageway along which this vehicle is moving (1).

It should be noted that in order to implement the method, the LV moves parallel to rectilinear features located in the video camera coverage area (road markings, edges of buildings and roads).

Images from video cameras are sent to the onboard computer and processed independently of each other. Based on this, all subsequent stages are considered from the point of view of a single video camera. The original image is preprocessed, which implies correcting radial distortion to eliminate distortions of the observed objects caused by the lens of the video camera, and then the image is converted to grayscale (2), then linear features are identified in the image, preferably by the Canny algorithm, after which the found linear features are combined into one image by pixel addition (3).

At the next stage, the image is smoothed with a Gaussian filter to compensate for errors in detecting linear environmental features (4). After that, rectilinear segments intersecting at the vanishing point are highlighted in the smoothed image.

Rectilinear segments in the image are formed using the application of the fast Hough transform (FHT), according to which a Hough image is constructed (5), then the search area for the vanishing point on the Hough image is determined.

To identify the area of the vanishing point search, a black-and-white image is formed, where the neighborhood of the expected point is marked in white, FHT is applied to the resulting image, the coordinates of the leftmost and rightmost pixels with a non-zero value are determined on the resulting Hough image, while the values of these pixels on the X-axis set the search range for the vanishing point.

To highlight rectilinear segments on the Hough image, the brightest white pixel in the image is registered as the maximum, which is initially represented as a $y=kx+b$ straight line, after that its neighborhood is removed from the Hough image by assigning zero values to the corresponding pixels.

The determined maximum point with coordinates (k, b) is transformed back into a rectilinear segment, described by a $y=kx+b$ function, when it is superimposed on the original image.

While forming a set of rectilinear segments, the found segment is checked to determine if it is horizontally or vertically oriented, and in case of an angular mismatch of this segment from the vertical or horizontal straight line by less than a given threshold angular value, this segment is excluded from the set of rectilinear segments. This step allows to reduce the negative impact of additional objects in the camera coverage (roofs of cars, trees, etc.).

After forming a set of rectilinear segments in the original image, the position of the vanishing point (7) is determined as the intersection point of the rectilinear segments highlighted in the image. To this end, the set of selected rectilinear segments, each of which is described by a $y=kx+b$ function, is transformed into a parameter space $(k, b)$ in which each rectilinear segment is represented as a point with coordinates $(k, b)$.

With such parameterization, the set of these rectilinear segments intersecting in the original image is represented by a set of points lying on one straight line, characterized by the parameters $\hat{k}, \hat{b}$ and described by a $y=\hat{k}x+\hat{b}$ function.

To determine these parameters, lines are constructed between all possible pairs of points, and then, the average value is determined among the set of slope coefficients of these lines, which is the slope coefficient of the line $\hat{k}$ characterizing the position of the vanishing point. The intercept $\hat{b}$ is determined by the found coefficient $\hat{k}$ as the average value among the set of intercepts of the constructed lines with a constant slope coefficient $k$.

The resulting straight line $y=\hat{k}x+\hat{b}$ is transformed into a point on the original image with coordinates $(\hat{k}, \hat{b})$ by applying it to a rectangular coordinate system.

Thus, the constructed point on the original image with coordinates $(\hat{k}, \hat{b})$ is the vanishing point.

In order to evaluate the external calibration parameters of video cameras, the vanishing point position is compared with the principal point position, and the camera rotation angles are determined based on the deviation obtained, taking into account the focal lengths known from the internal calibration of the camera as follows:

$$\Psi = arctg\,\frac{u - u_0}{f_u}, \qquad \theta = arctg\,\frac{v - v_0}{f_v},$$

where $\Psi$, $\theta$ are pitch and yaw angles;
$u$, $v$ are coordinates of the determined vanishing point;
$u_0$, $v_0$ are coordinates of the principal point;
$f_u$, $f_v$ are focal lengths (width and height).

According to the assessment of change in camera rotation angles during the vehicle movement, their values are corrected and virtual rotation of the video camera is carried out.

Thus, the proposed method for calibrating the external parameters of video cameras with high accuracy and computational efficiency makes it possible to estimate the pitch and yaw angles of the video camera during the LV movement and can be widely used as part of autonomous LV localization systems in order to increase the accuracy of determining its own position.


**Claims**

1. A method for calibrating the external parameters of video cameras, wherein during the movement of the vehicle, images of the environment are obtained from video cameras, linear features of the environment are highlighted in the image, an image with linear features is formed and rectilinear segments are selected, the position of the vanishing point for the selected rectilinear segments is determined as the position of the intersection point of the formed rectilinear segments by determining the parameters of a function describing a straight line formed from a set of points characterizing the totality of these rectilinear segments; the vanishing point position is compared with the principal point position, and the values of the camera rotation angles are determined based on the deviation obtained, taking into account the focal lengths known from the internal calibration of the camera, and an adjusted image is formed taking into account determined camera rotation angles.

2.  The method according to claim 1, wherein the rectilinear segments in the image are formed using a fast Hough transform.

Fig. 1

## INTERNATIONAL SEARCH REPORT

| | International application No. |
|---|---|
| | PCT/RU 2022/050200 |

A. CLASSIFICATION OF SUBJECT MATTER

G06T 7/80 (2017.01)   G06V 20/58 (2022.01)   G06T 7/536 (2017.01)

According to International Patent Classification (IPC) or to both national classification and IPC

B. FIELDS SEARCHED

Minimum documentation searched (classification system followed by classification symbols)

G06T 7/00, 7/80, 7/50, 7/536, G06V 20/00, 20/50, 20/56, 20/58, G01C 3/00, 3/02, 3/06, 3/08, H04N 17/00

Documentation searched other than minimum documentation to the extent that such documents are included in the fields searched

Electronic data base consulted during the international search (name of data base and, where practicable, search terms used)

PatSearch (RUPTO internal), USPTO, PAJ, K-PION, Esp@cenet, Information Retrieval System of FIPS

C. DOCUMENTS CONSIDERED TO BE RELEVANT

| Category* | Citation of document, with indication, where appropriate, of the relevant passages | Relevant to claim No. |
|---|---|---|
| A | US 2015/0178924 A1 (QUALCOMM INCORPORATED) 25.06.2015 | 1-2 |
| A | US 2018/0324415 A1 (INTEL CORPORATION) 08.11.2018 | 1-2 |
| A | US 2018/0357791 A1 (DELPHI TECHNOLOGIES, LLC) 13.12.2018 | 1-2 |
| A | US 2016/0350921 A1 (ACCENTURE GLOBAL SOLUTIONS LIMITED) 01.12.2016 | 1-2 |
| A | RU 2662411 C2 (FORD GLOBAL TEKHNOLODZHIS) 25.07.2018 | 1-2 |
| A | RU 2529594 C1 (AOKI SIN) 27.09.2014 | 1-2 |

☐ Further documents are listed in the continuation of Box C.       ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 September 2022 (29.09.2022) | 20 October 2022 (20.10.2022) |

| Name and mailing address of the ISA/ RU | Authorized officer |
|---|---|
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20150096128
- US 2011115912 A
- CN 112017249
- US 2018324415 A